# EUROPEAN PATENT APPLICATION

(11) **EP 4 368 497 A1**
(43) Date of publication of application: **15.05.2024**
(21) Application number: 23197627.5
(22) Date of filing: 15.09.2023
(51) Int. Cl.: B64C 1/14, B60J 5/06, B64D 11/00, B64D 11/06, E05D 15/06

(54) **DOOR FOR A VEHICLE CABIN**

(30) Priority: 04.11.2022 US 202263382403 P; 31.05.2023 US 202318327002
(71) Applicant: The Boeing Company, Arlington, VA 22202 (US)
(72) Inventor: LEBLANC, Thomas, Arlington, 22202 (US); CAMPBELL, Shannon K, Arlington, 22202 (US); ROBLES, Francisco Javier, Arlington, 22202 (US)
(74) Representative: Boult Wade Tennant LLP

(57) **Abstract**

A door is provided for a furniture structure of a vehicle cabin. The door includes a frame configured to expand and collapse along a longitudinal axis of the door between a collapsed position and an expanded position. The door includes a cover extending over at least a portion of the frame.

## Description

### BACKGROUND

Existing FAA Part 25 rules (25.813(e)) prohibit a door from being placed between a seated passenger and an emergency exit. The FAA has issued Partial Grants of Exemption to this rule that include numerous conditions that must be complied with. For example, the door must be open and secured during taxi, take-off, and landing, and each mini suite must only be occupied by a single occupant. Existing suites have a permanently attached door, and although the door is controlled to be latched open and secured during taxi, take-off, and landing, the FAA requires an additional emergency egress path based on the assumption that the door latching device failed, and thus jammed the door closed, thereby impeding occupant egress out of the suite.

### SUMMARY

There is provided a door for a furniture structure of a vehicle cabin. The door includes a frame configured to expand and collapse along a longitudinal axis of the door between a collapsed position and an expanded position. The door includes a cover extending over at least a portion of the frame.

There is also provided a door is provided for a furniture structure of a vehicle cabin. The door includes a frame configured to be rotatably mounted to the furniture structure such that the frame is configured to rotate relative to the furniture structure between an open position and a closed position, wherein the frame is configured to be removably mounted to the furniture structure such that the door is configured to be selectively mounted to and dismounted from the furniture structure.

There is also provided a door is provided for a furniture structure of a vehicle cabin. The door includes a frame configured to be removably mounted to the furniture structure such that the door is configured to be selectively mounted to and dismounted from the furniture structure.

### BRIEF DESCRIPTION OF THE DRAWINGS

The present description will be better understood from the following detailed description read in light of the accompanying drawings, wherein:
FIG. 1 is a perspective view of an aircraft furniture structure;
FIG. 2 is a plan view of two adjacent aircraft furniture structures;
FIG. 3 is an elevational view of the aircraft furniture structures shown in FIG. 2;
FIG. 4 is an elevational view of a door for a furniture structure illustrating an expanded position of the door;
FIG. 5 is a partially cut-away elevational view of the door shown in FIG.;
FIG. 6 is a partially cut-away elevational view of the door shown in FIGS. 4 and 5 illustrating a partially-collapsed position of the door.
FIG. 7 is an elevational view of the door shown in FIGS. 4-6 illustrating a collapsed position of the door;
FIG. 8 is a plan view of the aircraft furniture structures shown in FIGS. 2 and 3 illustrating the door in the collapsed position shown in FIG. 7;
FIG. 9 is a plan view of the door illustrated in FIGS. 4-7;
FIG. 10 is an enlarged view of a portion of the door illustrated in FIG. 9;
FIG. 11 is a perspective view of a door for a furniture structure;
FIG. 12 is a plan view of the aircraft furniture structures shown in FIGS. 2 and 3 illustrating the door shown in FIG. 11 in an open position.

Like reference numerals are used to designate like parts in the accompanying drawings.

### DETAILED DESCRIPTION

The detailed description provided below in connection with the appended drawings is intended as a description of the present examples and is not intended to represent the only forms in which the present examples are constructed or utilized. The description sets forth the functions of the examples and the sequence of operations for constructing and operating the examples. However, the same or equivalent functions and sequences may be accomplished by different examples.

While various spatial and directional terms, such as "upper," "lower," "vertical," "horizontal," and/or the like are used to describe examples of the present application, it is understood that such terms are merely used with respect to the orientations shown in the drawings. The orientations can be inverted, rotated, or otherwise changed, such that, for example, an upper side becomes a lower side (or a left side becomes a right side) if the structure is flipped 180°, a left side becomes a front side (or a bottom or top becomes a side) if the structure is pivoted 90°, etc.

Existing FAA Part 25 rules (25.813(e)) prohibit a door from being placed between a seated passenger and an emergency exit. Airline customers have requested mini suite designs with doors that violate this FAA rule. The FAA has issued Partial Grants of Exemption to this rule that include numerous conditions that must be complied with. For example, the door must be open and secured during taxi, take-off, and landing, and each mini suite must only be occupied by a single occupant. Existing suites have a permanently attached door, and although the door is controlled to be latched open and secured during taxi, take-off, and landing, the FAA requires an additional emergency egress path based on the assumption that the door latching device failed, and thus jammed the door closed, thereby impeding occupant egress out of the suite. Existing suite door designs are permanently secured/attached to the mini suite and are not collapsible. The examples described below are not limited to examples which solve any or all of the disadvantages of known suite doors.

Certain examples disclosed herein provide a door for a furniture structure of a vehicle cabin. The door includes a frame configured to expand and collapse along a longitudinal axis of the door between a collapsed position and an expanded position. The door includes a cover extending over at least a portion of the frame.

Certain examples disclosed herein provide a door for a furniture structure of a vehicle cabin. The door includes a frame configured to be removably mounted to the furniture structure such that the door is configured to be selectively mounted to and dismounted from the furniture structure.

Certain examples disclosed herein provide a door for a furniture structure of a vehicle cabin. The door includes a frame configured to be rotatably mounted to the furniture structure such that the frame is configured to rotate relative to the furniture structure between an open position and a closed position. The frame is configured to be removably mounted to the furniture structure such that the door is configured to be selectively mounted to and dismounted from the furniture structure.

Certain examples disclosed herein operate in an unconventional manner to provide a collapsible, removable, and/or storable door for a suite of a vehicle cabin (e.g., an aircraft cabin, etc.). In some examples, the door uses a pivoting brace mechanism (e.g., a frame, etc.) surrounded by two retractable flexible surfaces (e.g., that at least partially cover a pivoting frame, etc.). In some examples, the door is (e.g., relatively easily, etc.) collapsible using a retractor and a pivoting joint. In some examples, the door is rotatable relative to a furniture structure between an open position and a closed position.

In some examples, the door is removable from the suite without requiring the use of one or more tools. In some examples, the removability of the door enables remote storage of the door within a closet, overhead storage bin, and/or the like. In some examples, the ability of the door to collapse facilitates remote storage of the door.

By providing a door that is removable and/or remotely storable (e.g., during taxi, takeoff, landing, etc.), the mini suite no longer violates FAR 25.813(e). Therefore, dividers between two adjacent suites that are required to meet a design showing single occupancy are capable of being lowered and/or opened. The resultant configurations would then be treated on a regulatory basis similar to two first-class passenger seats in lieu of a mini suite with a door, and would therefore not be required to comply with the door exemptions. The removable and/or storable doors disclosed herein expand the evolution of the mini suite, for example by offering airline customers numerous options when configurating the passenger cabin.

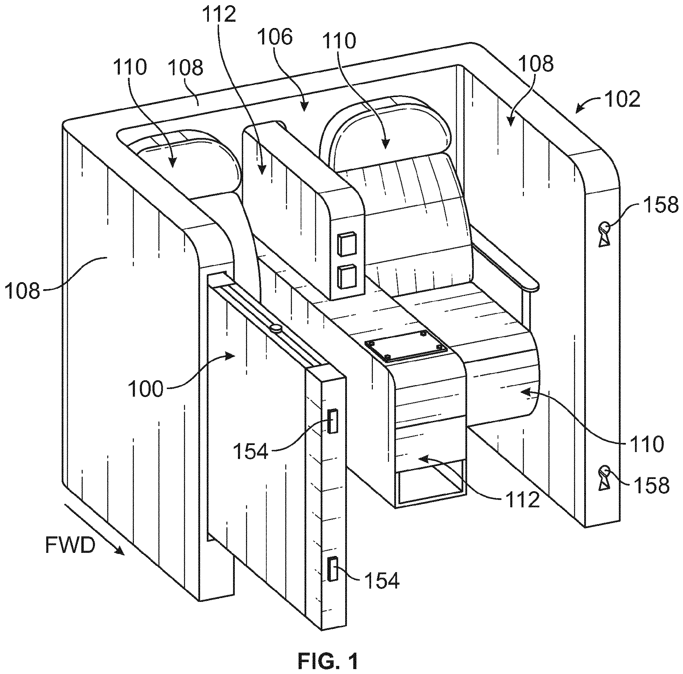

FIGS. 1-3 illustrate perspective, plan, and aisle views, respectively, of a furniture structure 102 of a vehicle cabin. Referring to FIGS. 1-3, an example of a door 100 for the furniture structure 102 of the vehicle cabin is provided. In the illustrated example, the vehicle cabin is an aircraft cabin and the furniture structure 102 is an aircraft furniture structure 102. However, the door examples disclosed herein are not limited to aircraft, but rather are applicable to any type of vehicle, such as, but not limited to, automobiles, rail cars, marine vehicles (e.g., boats, submarines, catamarans, canoes, kayaks, etc.), and/or the like. For example, the doors disclosed herein may be used in the cabin (e.g., the passenger compartment, etc.) of an automobile, the cabin of a rail car, the cabin of a marine vehicle, etc.

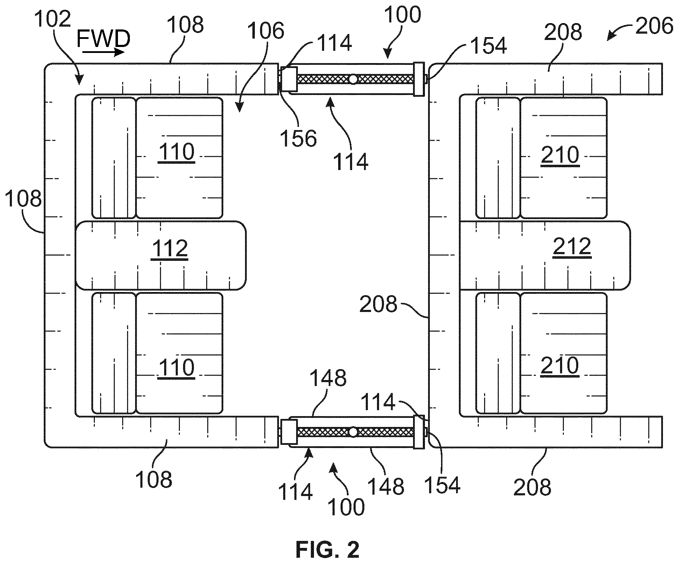

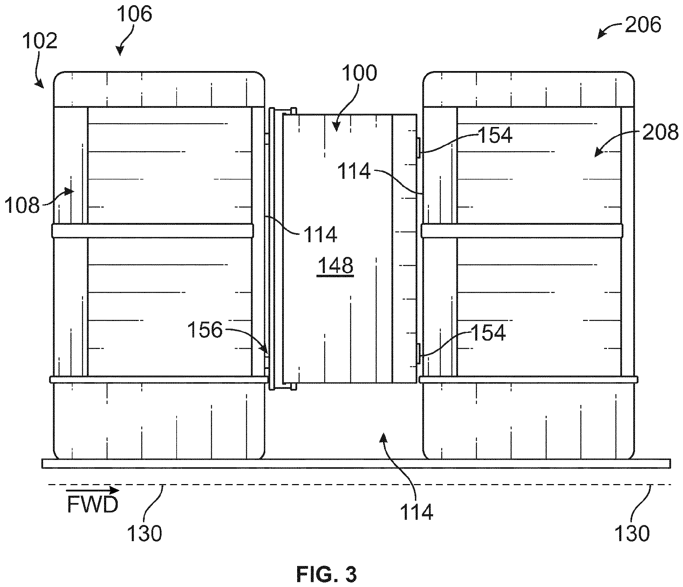

In some examples including the illustrated example, the furniture structure 102 includes a suite 106 (e.g., a mini suite, etc.) that includes a suite perimeter wall 108 and one or more seats 110 (not visible in FIG. 3) contained within the wall 108. Although two seats 110 are shown, the suite 106 may include any other number of seats 110 (e.g., a single, i.e., one, seat; three seats; four seats, etc.). some examples including illustrated example include an optional divider 112 (not visible in FIG. 3) between the seats 110. As shown in FIGS. 2 and 3, the suite 106 is positioned adjacent another suite 206 (e.g., including a wall 208, seats 210, and divider 212, etc.) such that one or more accesses 114 (e.g., entrances, exits, etc.) is provided to enable access into and out of the suit 106. Although two doors 100 are shown, the suite 106 may include any other number of doors 100 (e.g., a single, i.e., one, door; three doors; four doors, etc.).

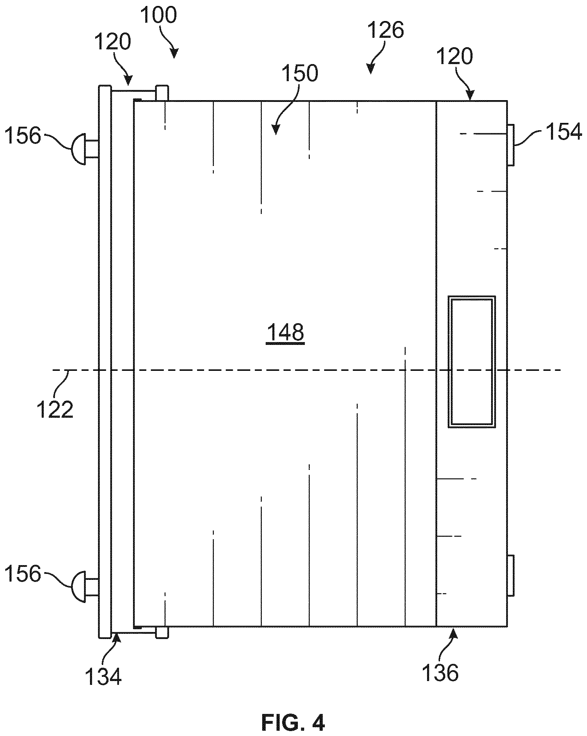

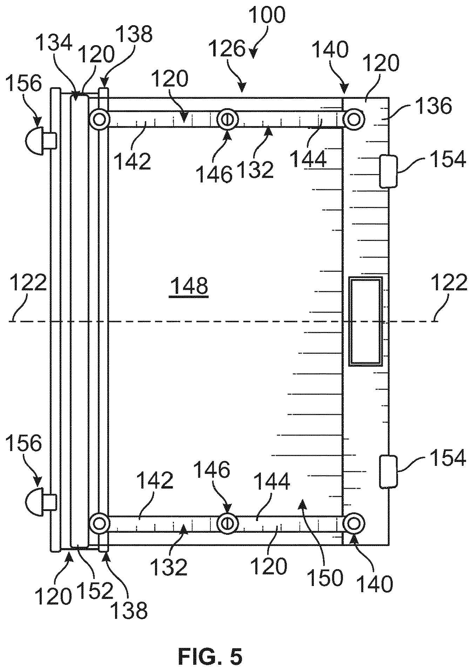

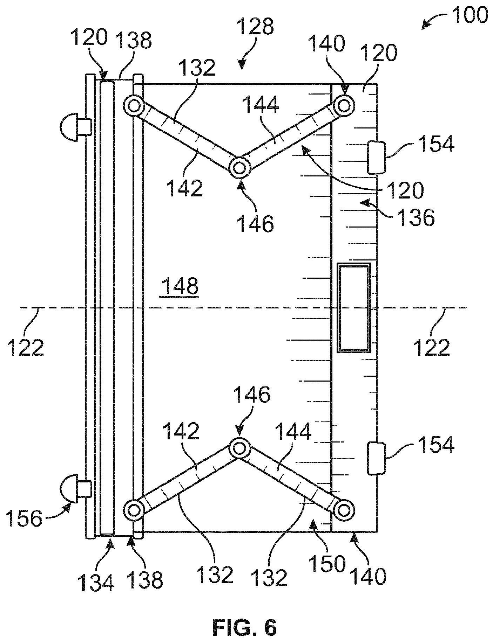

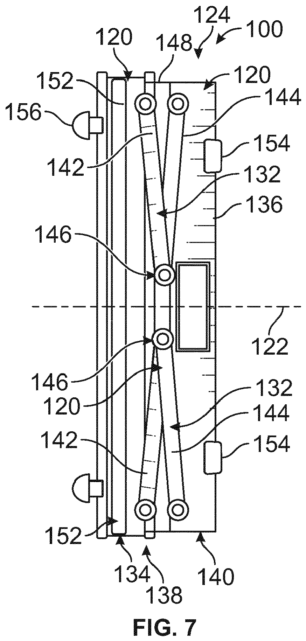

In some examples , the door 100 is collapsible, removable, and/or storable. For example, and referring now to FIGS. 4-7, the door 100 includes a frame 120 that extends a length along a longitudinal axis 122. The frame 120 is configured to expand and collapse along the longitudinal axis 122 between a collapsed position 124 and an expanded (e.g., deployed, etc.) position 126. The collapsed position 124 of the door 100 is shown in FIG. 7. The expanded position 126 of the door 100 is shown in FIGS. 4 and 5. FIG. 6 illustrates a partially-collapsed position 128 of the door 100.

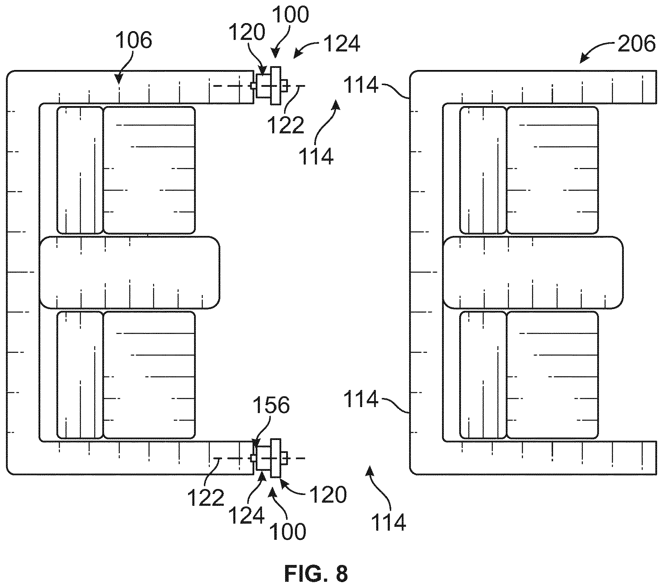

As shown in FIG. 8, the collapsed position 124 of the door 100 (e.g., of the frame 120, etc.) opens the corresponding access 114 of the suite 106 such that a passenger or other occupant of the suite 106 can enter or exit the suite 106. In the expanded position 126 of the door 100 (e.g., of the frame 120, etc.) shown for example in FIGS. 2 and 3, the door 100 at least partially blocks the corresponding access 114 of the suite 106. In some examples, the door 100 provides a divider between adjacent suites (e.g., similar to a honeymoon suite, etc.). For instance, the illustrated example of the door 100 provides a divider between the suites 106 and 206. Any other arrangement of the door 100 may be used as a divider, for example a divider wherein the longitudinal axis 122 extends perpendicular or approximately perpendicular to a longitudinal axis 130 (FIG. 3) of the vehicle cabin, etc.

Referring to FIGS. 5-7, in the illustrated example, the frame 120 of the door 100 includes one or more braces 132. The brace 132 is configured to fold along a length thereof. For instance, in some examples including the illustrated example, the frame 120 includes first and second frame members 134 and 136, respectively, with the brace 132 extending a length from the first frame member 134 to the second frame member 136, and vice versa. The brace 132 includes first and second end portions 138 and 140, respectively, that are pivotally (e.g., hingedly, rotatably, etc.) mounted to the first and second frame members 134 and 136, respectively. The brace 132 includes two segments 142 and 144 that are connected together at a hinge 146 (i.e., the brace 132 includes the hinge 146 extending between the first end portion 138 and the second end portion 140). Accordingly, the segments 142 and 144 can pivot (e.g., rotate, etc.) about the hinge 146 such that the brace 132 is collapsible along the length thereof. The ability of the brace 132 to collapse enables the frame 120 to collapse along the longitudinal axis 122 (i.e., along the length) of the frame 120. Although two are shown, the frame 120 may include any other number of the braces 132.

Optionally, the first end portion 138 and/or the second end portion 140 of the brace 132 is pivotally (e.g., hingedly, rotatably, etc.) mounted to the corresponding frame member 134 and/or 136 using barrel mount and/or torsion hardware. In some examples, barrel mount and/or torsion hardware supports the brace 132 vertically, for example to facilitate preventing the brace 132 from buckling in the expanded position 126 of the door 100. In some examples, the brace 132 is a spring open parallel arm. Any other structure, component, mechanism, and/or the like may be additionally or alternatively used to pivotally mount the first end portion 138 and/or the second end portion 140 to the corresponding frame member 134 and/or 136.

In addition or alternatively to the brace 132, the frame member 134, the frame member 136, and/or the like, the frame 120 may include any other structure, component, mechanism, and/or the like that enables the frame 120 to expand and collapse between the expanded position 126 and the collapsed position 124. For example, the brace 132 may include two or more of the hinges 146 such that the brace 132 folds similar to an accordion, the brace 132 may fold along the length thereof along a width direction (e.g., a direction perpendicular or approximately perpendicular to the longitudinal axis 122, a direction into the page of FIGS. 4-7, etc.) in addition or alternatively to folding along the longitudinal axis 122, etc.

In some examples, the door 100 includes one or more covers 148 that extend over at least a portion of the frame 120. Optionally, the cover 148 includes a flexible segment 150. The flexible segment 150 of the cover 148 may be fabricated from any material(s), such as, but not limited to, a fabric, a sheet, plastic, a polymer, a fiber, a natural fiber, and/or the like. Although two are shown, the door 100 may include any other number of the covers 148.

Referring now to FIGS. 5-10, to accommodate the expanding and collapsing function of the frame 120 between the expanded position 126 and the collapsed position 124, some examples of the frame 120 include a retractor mechanism (e.g., a roller blind mechanism, etc.) to expand and retract the cover 148 along with the frame 120. For instance, in the illustrated example of the cover 148 is mounted on a corresponding roller 152 and configured to retract at least partially around the roller 152 when the frame 120 is moved to the collapsed position 124. For example, the flexible segment 150 of the cover 148 is configured to expand and retract (e.g., wind and unwind, etc.) on the roller 152 between a retracted position of the cover 148 (shown in FIGS. 7 and 8) and an expanded (e.g., deployed, etc.) position of the cover 148 (shown in FIGS. 1-5 and 9). When the frame 120 is moved from the expanded position 126 to the collapsed position 124, the flexible segment 150 of the cover 148 retracts to the retracted position of the cover 148, for example by winding around the roller 152. In some examples, the retractor mechanism (e.g., the roller 152, etc.) is spring-loaded such that the cover 148 is biased toward the retracted position of the cover 148.

In addition or alternatively to the roller 152, the retractor mechanism, a roller blind mechanism, a spring-loaded mechanism, and/or the like, the cover 148 may include any other structure, component, mechanism, and/or the like that enables the door 100 to expand and collapse between the expanded position 126 and the collapsed position 124. For example, the flexible segment 150 of the cover 148 may fold along the length thereof (e.g., similar to an accordion, etc.), etc.

Referring to FIGS. 2-7, in some examples, the door 100 includes one or more mechanisms that facilitate releasably holding the door 100 in the expanded position 126. For instance, the illustrated example includes one or more magnetic components 154 that cooperate with a magnetic component of the other suite 206 to releasably hold the door 100 in the expanded position 126 using magnetic force. In some examples, the magnetic component of the other suit 206 is defined by a portion of the wall 208, a discrete magnetic component is mounted to the wall 208, and/or the like. Although two are shown, the door 100 may include any number of the magnetic component 154. In addition or alternative to the magnetic component 154 and/ the magnetic component of other suite 206, the mechanism that facilitates releasably holding the door 100 in the expanded position 126 may include any other structure, component, mechanism, and/or the like that enables the door 100 to be releasably held in the expanded position 126, such as, but not limited to, a quarter-turn fastener, a half-turn fastener, a snap-fit fastener, an interference-fit fastener, a threaded fastener, a latch, a pin, a clevis, a detent, a detent of the brace 132, friction and/or stiction, friction and/or stiction within the brace 132, a hook, a loop, an arm, and/or the like.

In some examples, and referring now to FIGS. 2-10, the door 100 is configured to be removably mounted to the furniture structure 102, for example to enable the door 100 to be selectively mounted to and dismounted from the furniture structure 102. For instance, the illustrated example of the door 100 is removably mounted to the suite perimeter wall 108 of the suite 106. In some examples including the illustrated example, the frame 120 of the door 100 includes one or more connectors 156 configured to be removably connected to the furniture structure 102. For example, the connector 156 is configured to be removably connected to the suite perimeter wall 108 to enable the frame 120 to be selectively mounted to and dismounted from the suite perimeter wall 108.

Once dismounted (i.e., removed) from the furniture structure 102, the door 100 can be remotely stored (e.g., within a closet, an overhead storage bin, etc.), for example with the frame 120 in the collapsed position 124. In some examples, to remove and remotely store the door 100, the door 100 is collapsed, un-clipped from the suite perimeter wall 108, and stowed away. In some examples, the ability of the door 100 to collapse facilitates remote storage of the door 100.

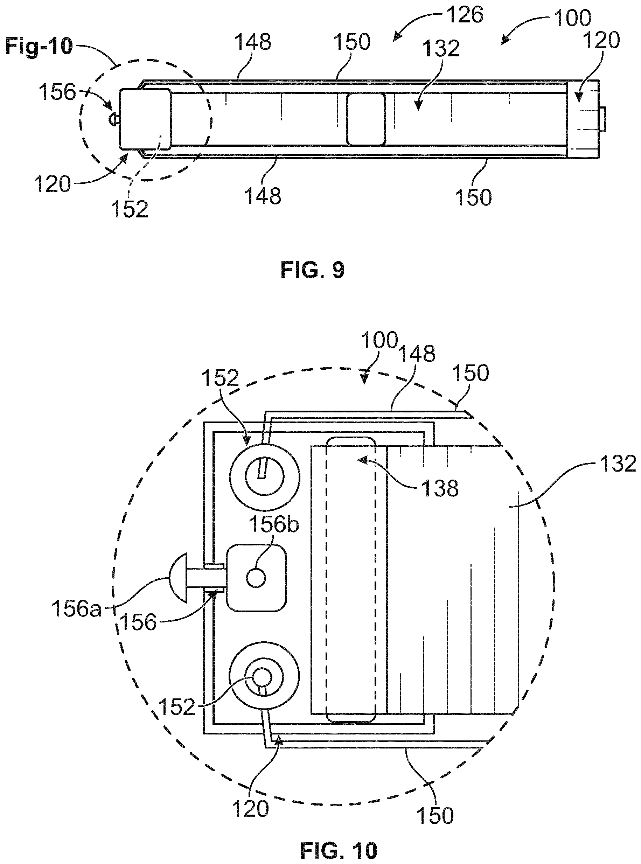

In the illustrated example, the connector 156 includes a bayonet fastener 156a (labeled in FIG. 9), for example a rotatable fitting, a twist fitting, a spring-loaded fitting, a keyhole fitting, etc. The illustrated example of the connector 156 includes a release button 156b (labeled in FIG. 9; e.g., a push button, a push bar, a push lever, a push latch, a pull bar, a pull lever, a pull latch, etc.) that enables a user to selectively release the bayonet fastener 156a from a complementary connector 158 (shown in FIG. 1; e.g., a receptacle, a keyhole, a slot, an opening, a recess, a detent, a depression, a female connector, etc.) of the furniture structure 102. In addition or alternatively to the bayonet fastener 156a, the release button 156b, and/or the illustrated complementary connector 158, the connector 156 and/or the complementary connector 158 may include any other structure, component, mechanism, and/or the like that enables the connector 156 to be removably connected to the furniture structure 102, such as, but not limited to, a quarter-turn fastener, a half-turn fastener, a snap-fit fastener, an interference-fit fastener, a threaded fastener, a latch, a pin, a clevis, a slotted receptacle mating to keyhole, a detent, friction/stiction, a hook, a loop, an arm, and/or the like.

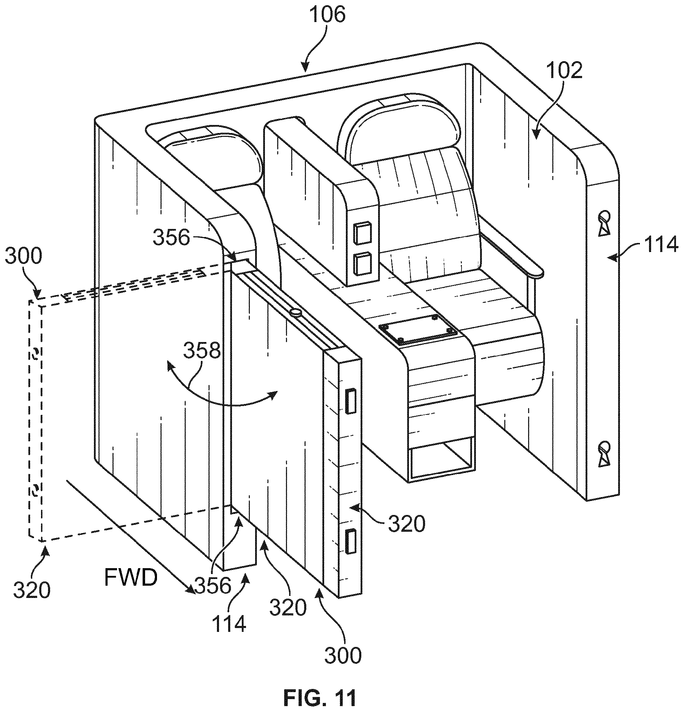

In addition or alternatively to the expanding and collapsing function of the door 100, the frame 120 of the door 100 may be rotatably mounted to the furniture structure 102 such that the door 100 is configured to rotate relative to the furniture structure 102 between an open position and a closed position. For example, FIG. 11 illustrates a door 300 that includes a frame 320 that is rotatably mounted to the furniture structure 102 about a hinge 356 such that the door 300 rotates about the hinge 356 (e.g., along an arc 358, etc.) relative to the furniture structure 102 between an open position (shown by dashed lines in FIG. 11) and a closed position (shown by solid lines in FIG. 11).

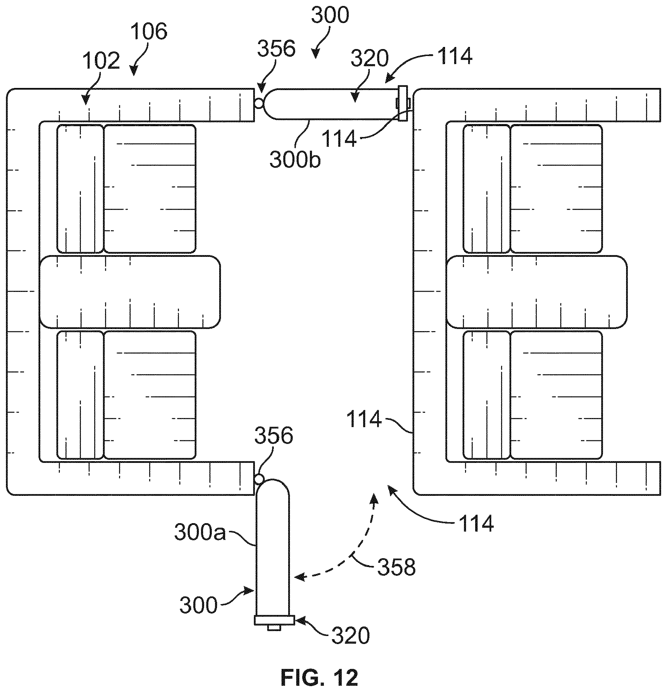

As shown in FIG. 12, the open position of the door 300a (e.g., of the frame 320, etc.) opens the corresponding access 114 of the suite 106 such that a passenger or other occupant of the suite 106 can enter or exit the suite 106 through the open door 300a. In the closed position of the door 300b (e.g., of the frame 320, etc.), the door 300b at least partially blocks the corresponding access 114 of the suite 106, as is also illustrated in FIG. 12. In some examples, the door 300 provides a divider between adjacent suites (e.g., similar to a honeymoon suite, etc.).

In some examples, the door 300 is configured to be removably mounted to the furniture structure 102, for example to enable the door 300 to be selectively mounted to and dismounted from the furniture structure 102. For example, the door 300 may include a connector similar to the connector 156 (shown in FIGS. 2-10) that enables the door 300 to be selectively mounted to and dismounted from the furniture structure 102, but that also includes the hinge 356 (and/or another rotating connection) to enable the door 100 to rotate between the open and closed positions, etc.

In some examples, a door for a furniture structure of a vehicle cabin includes a frame configured to expand and collapse along a longitudinal axis of the door between a collapsed position and an expanded position. The door includes a cover extending over at least a portion of the frame.

The frame may include a brace that includes two segments connected together at a hinge. The frame may include a brace that is configured to fold along a length thereof.

The frame may include first and second frame members and a brace extending a length between the first and second frame members. The brace may include first and second end portions that are pivotally mounted to the first and second frame members. The brace may include a hinge extending between the first and second end portions such that the brace is collapsible along the length thereof.

The door may be configured to be removably mounted to the furniture structure.

The frame may include a connector configured to be removably connected to the furniture structure.

The frame may include a connector configured to be removably connected to the furniture structure. The connector may enable the frame to be selectively mounted to and dismounted from the furniture structure.

The door may be configured to be remotely stored when the frame is in the collapsed position.

The cover may include a flexible segment.

The cover may be mounted on a roller and be configured to retract at least partially around the roller when the frame is moved to the collapsed position.

The cover may be mounted on a roller and be configured to retract to a retracted position of the cover when the frame is moved to the collapsed position. The roller may be spring-loaded such that the cover is biased toward the retracted position of the cover.

The door may be configured to at least partially block an access to a suite of the vehicle cabin in the expanded position of the frame.

The door may be configured to open an access to a suite of the vehicle cabin in the collapsed position of the frame.

The door may include a divider between adjacent suites of the vehicle cabin.

In some examples, a door for a furniture structure of a vehicle cabin includes a frame configured to be rotatably mounted to the furniture structure such that the frame is configured to rotate relative to the furniture structure between an open position and a closed position. The frame is configured to be removably mounted to the furniture structure such that the door is configured to be selectively mounted to and dismounted from the furniture structure.

The frame may include a connector configured to be removably connected to the furniture structure.

The door may be configured to be remotely stored.

The door may include a cover extending over at least a portion of the frame.

The door may include a cover extending over at least a portion of the frame. The cover may include a flexible segment.

The door may be configured to at least partially block an access to a suite of the vehicle cabin in the closed position of the frame.

The door may be configured to open an access to a suite of the vehicle cabin in the open position of the frame.

The door may include a divider between adjacent suites of the vehicle cabin.

In some examples, a door is provided for a furniture structure of a vehicle cabin. The door includes a frame configured to be removably mounted to the furniture structure such that the door is configured to be selectively mounted to and dismounted from the furniture structure.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

Any range or value given herein can be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above can relate to one example or can relate to several examples. The examples are not limited to those that solve any or all of the stated problems or those that have any or all of the stated benefits and advantages. It will further be understood that reference to 'an' item refers to one or more of those items.

The order of execution or performance of the operations in examples of the present application illustrated and described herein is not essential, unless otherwise specified. That is, the operations can be performed in any order, unless otherwise specified, and examples of the application can include additional or fewer operations than those disclosed herein. For example, it is contemplated that executing or performing a particular operation before, contemporaneously with, or after another operation (e.g., different steps, etc.) is within the scope of the claims of the application.

The term "comprising" is used in this specification to mean including the feature(s) or act(s) followed thereafter, without excluding the presence of one or more additional features or acts. The terms "comprising," "including," and "having" are intended to be inclusive and mean that there can be additional elements other than the listed elements. In other words, the use of "including," "comprising," "having," "containing," "involving," and variations thereof, is meant to encompass the items listed thereafter and additional items. Accordingly, and for example, unless explicitly stated to the contrary, examples "comprising" or "having" an element or a plurality of elements having a particular property can include additional elements not having that property. Further, references to "one example" or "an example" are not intended to be interpreted as excluding the existence of additional examples that also incorporate the recited features. The term "exemplary" is intended to mean "an example of'.

When introducing elements of aspects of the application or the examples thereof, the articles "a," "an," "the," and "said" are intended to mean that there are one or more of the elements. In other words, the indefinite articles "a", "an", "the", and "said" as used in the specification and in the claims, unless clearly indicated to the contrary, should be understood to mean "at least one." Accordingly, and for example, as used herein, an element or step recited in the singular and preceded by the word "a" or "an" should be understood as not necessarily excluding the plural of the elements or steps.

The phrase "one or more of the following: A, B, and C" means "at least one of A and/or at least one of B and/or at least one of C." The phrase "and/or", as used in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one example, to A only (optionally including elements other than B); in another example, to B only (optionally including elements other than A); in yet another example, to both A and B (optionally including other elements); etc.

As used in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of or "exactly one of," or, when used in the claims, "consisting of," will refer to the inclusion of exactly one element of a number or list of elements. In general, the term "or" as used shall only be interpreted as indicating exclusive alternatives (i.e. "one or the other but not both") when preceded by terms of exclusivity, such as "either," "one of "only one of or "exactly one of." "Consisting essentially of," when used in the claims, shall have its ordinary meaning as used in the field of patent law.

As used in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one example, to at least one, optionally including more than one, A, with no B present (and optionally including elements other than B); in another example, to at least one, optionally including more than one, B, with no A present (and optionally including elements other than A); in yet another example, to at least one, optionally including more than one, A, and at least one, optionally including more than one, B (and optionally including other elements); etc.

Use of ordinal terms such as "first," "second," "third," etc., in the claims to modify a claim element does not by itself connote any priority, precedence, or order of one claim element over another or the temporal order in which acts of a method are performed. Ordinal terms are used merely as labels to distinguish one claim element having a certain name from another element having a same name (but for use of the ordinal term), to distinguish the claim elements.

Having described aspects of the application in detail, it will be apparent that modifications and variations are possible without departing from the scope of aspects of the appended claims. As various changes could be made in the above constructions, products, and methods without departing from the scope of the claims, it is intended that all matter contained in the above description and shown in the accompanying drawings shall be interpreted as illustrative and not in a limiting sense.

It is to be understood that the above description is intended to be illustrative, and not restrictive. For example, the above-described examples (and/or features thereof) can be used in combination with each other. In addition, many modifications can be made to adapt a particular situation or material to the teachings of the various examples of the application without departing from the scope of the claims. While the dimensions and types of materials described herein are intended to define the parameters of the various examples of the application, the examples are by no means limiting and are examples. Many other examples will be apparent to those of ordinary skill in the art upon reviewing the above description. The scope of the various examples of the application should, therefore, be determined with reference to the appended claims. In the appended claims, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various examples of the application, including the best mode, and also to enable any person of ordinary skill in the art to practice the various examples of the application, including making and using any devices or systems and performing any incorporated methods. The patentable scope of the various examples of the application is defined by the claims, and can include other examples that occur to those persons of ordinary skill in the art.

## Claims

1. A door (100) for a furniture structure (102) of a vehicle cabin, the door (100) comprising:
a frame (120) configured to expand and collapse along a longitudinal axis (122) of the door (100) between a collapsed position (124) and an expanded position (126); and
a cover (148) extending over at least a portion of the frame (120).

2. The door (100) of claim 1, wherein the frame (120) comprises a brace (132) that includes two segments (142, 144) connected together at a hinge (146).

3. The door (100) of claim 1 or 2, wherein the frame (120) comprises a brace (132) that is configured to fold along a length thereof.

4. The door (100) of any preceding claim, wherein the frame (120) comprises first and second frame members (134, 136) and a brace (132) extending a length between the first and second frame members (134, 136), the brace (132) comprising first and second end portions (138, 140) that are pivotally mounted to the first and second frame members (134, 136), the brace (132) comprising a hinge (146) extending between the first and second end portions (138, 140) such that the brace (132) is collapsible along the length thereof.

5. The door (100) of any preceding claim, wherein the door (100) is configured to be removably mounted to the furniture structure (102).

6. The door (100) of any preceding claim, wherein the frame (120) comprises a connector (156) configured to be removably connected to the furniture structure (102), the connector (156) enabling the frame (120) to be selectively mounted to and dismounted from the furniture structure (102).

7. The door (100) of any preceding claim, wherein the door (100) is configured to be remotely stored when the frame (120) is in the collapsed position (120).

8. The door (100) of any preceding claim, wherein the cover (148) comprises a flexible segment (150).

9. The door (100) of any preceding claim, wherein the cover (148) is mounted on a roller and is configured to retract at least partially around the roller when the frame (120) is moved to the collapsed position (124).

10. The door (100) of any preceding claim, wherein the cover (148) is mounted on a roller (152) and is configured to retract to a retracted position of the cover (148) when the frame (120) is moved to the collapsed position (124), the roller (152) being spring-loaded such that the cover (148) is biased toward the retracted position of the cover (148).

11. A suite (106), optionally an aircraft cabin suite, comprising the door (100) of any preceding claim.

12. The suite (106) of claim 11, wherein the door (100) is configured to at least partially block access (114) to the suite (106) in the expanded position (126) of the frame (120) and/or to open access (114) to the suite (106) in the collapsed position (124) of the frame (120).

13. A vehicle cabin comprising the door of any of claims 1 to 10 or the suite (106) of either of claims 11 or 12.

14. The vehicle cabin of claim 13, wherein the door (100) comprises a divider between adjacent suites (106) of the vehicle cabin.

15. An aircraft comprising the vehicle cabin of claim 13 or 14.
